# EUROPÄISCHE PATENTSCHRIFT

(11) **EP 4 288 325 B1**
(45) Veröffentlichungstag und Bekanntmachung des Hinweises auf die Patenterteilung: **09.09.2026**
(21) Anmeldenummer: 22700132.8
(22) Anmeldetag: 07.01.2022
(51) Int. Cl.: B62D 5/065, B62D 5/24

(54) **LENKSYSTEM FÜR FAHRZEUG, INSBESONDERE NUTZFAHRZEUG**
STEERING SYSTEM FOR A VEHICLE, IN PARTICULAR A UTILITY VEHICLE
SYSTÈME DE DIRECTION POUR VÉHICULE, EN PARTICULIER UN VÉHICULE UTILITAIRE

(30) Priorität: 04.02.2021 DE 102021102616
(43) Veröffentlichungstag der Anmeldung: 13.12.2023
(73) Patentinhaber: KNORR-BREMSE Systeme für Nutzfahrzeuge GmbH, 80809 München (DE)
(72) Erfinder: LANG, Rainer, 73525 Schwäbisch Gmünd (DE); PETERREINS, Klaus, 70794 Filderstadt (DE); KALTENBACH, Christian, 70195 Stuttgart (DE)
(86) Internationale Anmeldenummer: PCT/EP2022/050236
(87) Internationale Veröffentlichungsnummer: WO 2022/167169

(56) Entgegenhaltungen:
- EP-A1- 1 118 527
- WO-A1-2020/187476
- DE-A1- 102014 117 301
- JP-A- 2002 349 453

## Beschreibung

Die vorliegende Erfindung betrifft ein Lenksystem für ein Fahrzeug, insbesondere Nutzfahrzeug, mit wenigstens einem Lenkgetriebe, insbesondere Kugelmutter-Hydrolenkgetriebe; mit wenigstens einem Lenkmechanismus zur Lenkung wenigstens eines ersten Fahrzeugrades und zur Lenkung wenigstens eines zweiten Fahrzeugrades.

Die Erfindung ist insbesondere für ein Lenksystem in leichten und schweren Nutzfahrzeugen vorgesehen, welches mit einer EPS Lenkunterstützungsvorrichtung (Electronic Power Steering: EPS) basierend auf einem elektrohydraulischen Prinzip ausgerüstet ist. Das EPS Lenksystem weist ein diskontinuierliches Betriebsverhalten auf, d.h. das im Hydraulikkreislauf der Lenkung befindliche Hydrauliköl wird nur bei Lenkbewegungen von einer Hydraulikpumpe gefördert (Prinzip: Power on Demand). Wird nicht gelenkt, verbleibt das Hydrauliköl in Ruhe (Fördervolumen der Hydraulikpumpe ist im Wesentlichen null). Als Antrieb für die Hydraulikpumpe dient ein Motor, z.B. ein vom Fahrzeugantrieb bzw. Traktionsantrieb unabhängiger Antriebsmotor (z.B. ein Elektromotor in Form eines elektrischen BLCD Radialflussmotor). Diese Art von Lenksystem kann angewendet werden, um als Power on Demand Lenksystem zu fungieren (z.B. in elektrifizierten Nutzfahrzeugen ohne Verbrennungsmotor oder um automatisierte Fahranforderungen, z.B. durch Fahrerassistenzsysteme selbstständig ohne Fahrereingriff umzusetzen).

Auf Lenksystemen für Fahrzeuge, insbesondere für Nutzfahrzeuge, werden somit zukünftig weiter anwachsende Funktionsanforderungen gestellt, da das Lenksystem im Zuge der (Teil-)Automatisierung von Fahrzeuge eine wichtige Rolle spielt.

Dabei ist es besonders wichtig, dass das Lenksystem präzise und zuverlässig funktioniert und diesen wachsenden Funktionsanforderungen Rechnung trägt und dennoch hinsichtlich Bauraumanforderungen weiter optimiert werden kann. Die Erhöhung der Funktionsdichte bei Fahrzeugen betrifft nicht nur das Lenksystem, so dass bei einem im Wesentlichen gleichbleibenden Bauraum im Fahrzeug auch das Lenksystem mit Blick auf den Bauraum optimiert werden sollte, um weitere Funktionen des Lenksystems aber auch des Fahrzeugs an sich zu realisieren.

Aus dem Stand der Technik sind bereits Lenksysteme für Fahrzeuge bekannt.

So zeigt die DE 10114600 A1 eine Fahrzeuglenkung aufweisend eine vom Fahrer betätigbare Lenkbetätigungseinrichtung, insbesondere Lenkhandrad, jeweils ein elektromechanisches Stellaggregat zum Steuern jeweils eines rechts und links an einem Fahrzeugkörper befindlichen lenkbaren Rades eines Radpaares einer lenkbaren Fahrzeugachse, Mittel, die bei einem Ausfall oder einer Störung eines der beiden einer lenkbaren Fahrzeugachse zugeordneten Stellaggregate durch das jeweils andere, noch funktionstüchtige Stellaggregat die Steuerung der beiden Fahrzeugräder dieser Fahrzeugachse sicherstellen.

Ferner offenbart die DE 112012806263 T5 eine Fahrzeuglenkvorrichtung enthaltend: eine Lenkvorrichtung, die konfiguriert ist, um ein gelenktes Rad gemäß Bedienung eines Fahrzeuglenkrads zu drehen, wobei die Lenkvorrichtung einen ersten Motor und einen zweiten Motor zum Lenken enthält, die elektrische Charakteristiken haben, die zueinander gemeinsam gesetzt sind; einen ersten Stromsensor, der konfiguriert ist, um einen ersten Stromwert eines durch den ersten Motor fließenden Stroms zu erfassen; einen zweiten Stromsensor, der konfiguriert ist, um einen zweiten Stromwert eines durch den zweiten Motor fließenden Stroms zu erfassen; sowie Abnormalitätsdiagnoseeinheiten.

WO 2020/187476 A1 offenbart Lenkunterstützungsvorrichtung für ein Fahrzeug, umfassend: eine Eingangswelle zum Einleiten eines Drehmoments von einer Lenksäule des Fahrzeugs in die Lenkunterstützungsvorrichtung; einen Drehmomentsensor, wobei der Drehmomentsensor ausgebildet ist, um das über die Eingangswelle eingeleitete Drehmoment zu erfassen und ein Sensorsignal bereitzustellen, welches das erfasste Drehmoment repräsentiert; eine Ausgangswelle zum Ausleiten des Drehmoments aus der Lenkunterstützungsvorrichtung; eine Getriebeeinheit, wobei die Getriebeeinheit ausgebildet ist, um das Drehmoment von der Eingangswelle mechanisch auf die Ausgangswelle zu übertragen, wobei die Getriebeeinheit innerhalb eines Lenkgehäuses angeordnet ist; und eine Antriebseinheit, wobei die Antriebseinheit ausgebildet ist, um abhängig von dem Sensorsignal die Getriebeeinheit mit einem hydraulischen Arbeitsmedium zu beaufschlagen, wobei die Antriebseinheit und der Drehmomentsensor in mechanischem Kontakt mit dem Lenkgehäuse angeordnet sind.

DE 10 2014 117301 A1 offenbart Lenksystem für ein Kraftfahrzeug, mit: einer von einem Elektromotor angetriebenen Hydraulikpumpe; einem in einem Lenkgetriebegehäuse angeordneten Arbeitszylinder, welcher über eine Ventilanordnung mit der Hydraulikpumpe verbunden ist und den von dieser aufgebrachten Druck in eine auf einen Lenkstockhebel wirkende Kraft umwandelt; und einem mit der Hydraulikpumpe und dem Arbeitszylinder verbundenen Ölbehälter zum Volumenausgleich des Arbeitszylinders, wobei die Hydraulikpumpe, der die Hydraulikpumpe antreibende Elektromotor und der mit der Hydraulikpumpe und dem Arbeitszylinder verbundene Ölbehälter in oder an dem Lenkgetriebegehäuse angeordnet sind.

Zudem zeigt die DE 102011121827 A1 ein Servolenkungssystem umfassend einen Kraftzylinder, der mit einem Paar von Druckkammern versehen ist, um eine Lenkkraft zumindest einem von gelenkten Rädern basierend auf einer Druckdifferenz zwischen dem Paar der Druckkammern bereitzustellen; einen Lenkmechanismus, um das gelenkte Rad gemäß einer Lenkdrehbetätigung eines Lenkrads einzuschlagen; eine erste Pumpe, die mit einer ersten Antriebswelle versehen ist, um ein Arbeitsfluid einhergehend mit einer Drehung der ersten Antriebswelle anzusaugen und auszustoßen, um dem Kraftzylinder das Arbeitsfluid zuzuführen, wobei die erste Pumpe von einer ersten Antriebsquelle rotierend angetrieben wird; eine zweite Pumpe, die mit einer zweiten Antriebswelle versehen ist, um das Arbeitsfluid einhergehend mit der Drehung der zweiten Antriebswelle anzusaugen und auszustoßen, um dem Kraftzylinder das Arbeitsfluid zuzuführen; eine zweite Antriebsquelle, die eine Antriebsquelle ist, welche sich von der ersten Antriebsquelle unterscheidet, wird von einem Elektromotor gebildet und treibt die zweite Pumpe rotierend an; ein Steuerventil, das im Lenkmechanismus angeordnet ist, um das Arbeitsfluid, das von der ersten Pumpe oder der zweiten Pumpe zugeführt wurde, dem Paar der Druckkammern gemäß einer Lenkdrehbewegung des Lenkrads selektiv zuzuführen.

Derartige Lenkeinrichtungen aus dem Stand der Technik sind nach wie vor teuer und komplex bzw. aus vielen Bauteilen bestehend aufgebaut, erfordern einen großen Bauraum und weisen ein hohes Gewicht auf. Demnach ergeben sich diverse Fehlerquellen, die im ungünstigsten Fall zum Ausfall des Fahrzeugs führen können.

Es ist daher die Aufgabe der vorliegenden Erfindung, ein Lenksystem der eingangs genannten Art in vorteilhafter Weise weiterzubilden, insbesondere dahingehend, dass das Lenksystem weniger Gewicht aufweist, hinsichtlich des Bauraums optimiert ist und präziser bzw. dynamischer Lenkbefehle an die Fahrzeugräder umsetzt.

Diese Aufgabe wird erfindungsgemäß gelöst durch ein Lenksystem mit den Merkmalen des Anspruchs 1.

Die Erfindung basiert auf dem Grundgedanken, dass das Lenksystem ein baulich und funktional integriertes Lenkgetriebe aufweist. Im Unterschied zum Stand der Technik, in dem insbesondere die Hydraulikpumpe sowie Nebenaggregate wie Ausgleichsbehälter, ggf. Ventile usw. in der Nähe des Traktionsantriebs angeordnet sind, wird gemäß der vorliegenden Erfindung das Lenkgetriebe, die Hydraulikpumpe und der Antriebsmotor als eine gemeinsame Baueinheit zusammengefasst. Hierdurch können die Hydraulikleitungen wesentlich kürzer ausgebildet sein, wodurch es zusätzlich zu weniger Wärme- und Strömungsverlusten kommt. Im Übrigen kann das Lenksystem durch eine derartige Ausgestaltung gewichtssparender und mit weniger Bauraumbedarf ausgebildet werden. Bei diesem integralen Plug-and-Play Ansatz wird der Hydraulikkreislauf vom Traktionsantrieb (in der Regel ein Verbrennungsmotor bzw. Hybridantrieb) des Fahrzeugs entkoppelt und als kompakte Einheit an das Lenkgetriebe angebracht. In diesem Zusammenhang ist ebenfalls denkbar, dass die Hydraulikpumpe und der Antriebsmotor als vormontierte gemeinsame Motor-Pumpen-Einheit ausgebildet sind und zur Ausbildung der Baueinheit an das Lenkgetriebe angeflanscht sind.

Im Übrigen kann vorgesehen sein, dass der Antriebsmotor mit der Hydraulikpumpe direkt, insbesondere ohne Kupplung, gekoppelt ist. Dadurch wird die Motor-Pumpen-Einheit noch kompakter, wodurch sich weitere Vorteile hinsichtlich Bauraum und Gewicht ergeben. Im Übrigen kann diese Motor-Pumpen-Einheit dadurch steifer ausgestaltet werden, so dass weniger Materialermüdung bzw. weniger Verschleiß auftritt und somit ein besserer Wirkungsgrad der Motor-Pumpeneinheit erzielbar ist.

Weiter ist vorstellbar, dass der Antriebsmotor und die Hydraulikpumpe wenigstens eine gemeinsame Antriebswelle aufweisen. Durch diese Ausgestaltung wird die Motor-Pumpen-Einheit noch kompakter, wodurch sich weitere Vorteile hinsichtlich Bauraum und Gewicht ergeben. Zudem können durch die Ausgestaltung der Antriebswelle (z.B. durch gezielte Durchmesserauswahl) spezifisch die einzelnen Anforderungen von Hydraulikpumpe und Antriebsmotor adressiert werden. Folglich kann die Motor-Pumpeneinheit mit weniger Bauteilen auskommen, ist dadurch weniger komplex aufgebaut und weniger fehleranfällig und kann dennoch den Anforderungen von Hydraulikpumpe und Antriebsmotor an die Antriebswelle gerecht werden.

Zudem ist denkbar, dass das Lenksystem wenigstens eine erste Wellen-Lagereinrichtung und wenigstens eine zweite Wellen-Lagereinrichtung aufweist, durch welche die Antriebswelle im montierten Zustand zumindest teilweise gelagert ist. Zusätzlich zu der ersten und zweiten Wellen-Lagereinrichtung kann der Elektromotor und/oder die Hydraulikpumpe in ihren jeweiligen Gehäusen weitere Lagereinrichtungen aufweisen. Die erste und zweite Wellen-Lagereinrichtungen dienen insbesondere dazu, die teilweise gegensätzlichen Anforderungen von Hydraulikpumpe und Antriebsmotor an die Antriebswelle zu vereinen. So benötigt der Antriebsmotor eine möglichst steife bzw. unnachgiebige Antriebswelle samt Lagerung, um z.B. bei einem Elektromotor als Antriebsmotor den Luftspalt (zwischen Stator und Rotor) bei verschiedenen Drehmomenten und Wellengeschwindigkeiten konstant zu halten. Die Hydraulikpumpe wiederum benötigt eine möglichst flexible, elastische bzw. nachgiebige Welle, um insbesondere Radialbewegungen innerhalb der Hydraulikpumpe in definierten Grenzen zu ermöglichen. Dies ist notwendig, um Druck- und Temperaturkompensationen innerhalb der Pumpe zu gewährleisten und so den Betriebsbereich der Pumpe bezüglich Druck- und Temperaturanforderungen möglichst groß zu halten.

Außerdem ist es möglich, dass die erste Wellen-Lagereinrichtung und die zweite Wellen-Lagereinrichtung ein hybrides Lagersystem ausbilden. Ein hybrides Lagersystem ist besonders gut dazu geeignet, die teilweise gegensätzlichen Anforderungen der Motor-Pumpen-Einheit an die Antriebswelle zu vereinen. So kann beispielsweise die erste Wellen-Lagereinrichtung, zumindest hinsichtlich der auftretenden Biegebeanspruchung der Antriebswelle, im Bereich des Antriebsmotors steif ausgebildet sein. Im Gegensatz hierzu ist es möglich, durch einen axial definierten Abstand der zweiten Wellen-Lagereinrichtung zu der Hydraulikpumpe und durch eine entsprechende Ausgestaltung die Antriebswelle, zumindest hinsichtlich der auftretenden Biegebeanspruchung, im Bereich der Hydraulikpumpe elastisch bzw. nachgiebig auszubilden.

Des Weiteren kann vorgesehen sein, dass die erste Wellen-Lagereinrichtung im montierten Zustand an der Antriebswelle zwischen dem Antriebsmotor und der Hydraulikpumpe angeordnet ist. Diese Anordnung ist für eine Biege-Versteifung der Antriebswelle im Bereich des Antriebsmotors besonders vorteilhaft. Die erste Wellen-Lagereinrichtung erzeugt nämlich zwischen Hydraulikpumpe und Antriebsmotor eine radiale Lagerreaktionskraft, welche die durch die Hydraulikpumpe entstehenden Radial- bzw. Biegekräfte und die daraus resultierenden Biegemomente kompensiert. Dadurch kommt es innerhalb des Antriebsmotors nur zu sehr kleinen Biegeverformungen der Antriebswelle, was sich positiv auf den Wirkungsgrad auswirkt.

Ebenfalls ist vorstellbar, dass die erste Wellen-Lagereinrichtung als, insbesondere zweireihiges, Rillenkugellager ausgebildet ist. Ein Rillenkugellager ist als sehr ausgereiftes und millionenfach eingesetztes Bauteil mit klar definierten Vorteilen wie einem geringen radialen Lagerspiel bei gleichzeitig definierter Radialkraftbelastbarkeit und geringen Kosten sehr gut geeignet, um die erste Wellen-Lagereinrichtung auszubilden. Besonders geeignet ist jedoch ein zweireihiges Rillenkugellager, da dessen axiale Dimension zwar größer als ein einreihiges Kugellager ist, sich dadurch jedoch ein belastbareres und robusteres Lager vorsehen lässt. Zudem wird durch die zusätzliche axiale Verlängerung eine steifere Lagerung ermöglicht, wodurch sich der Wirkungsgrad des Antriebsmotors aus den gleichen Gründen erhöht, wie vorstehend bereits erläutert wurde.

Darüber hinaus ist denkbar, dass die Antriebswelle ein axiales Ende aufweist, das im montierten Zustand an einer Seite der Hydraulikpumpe herausragt, die dem Antriebsmotor abgewandt ist, wobei die zweite Wellen-Lagereinrichtung an diesem axialen Ende der Antriebswelle angeordnet ist. Durch eine derartige Ausgestaltung wird der Hebelarm zwischen radialer Reaktionskraft der zweiten Wellen-Lagereinrichtung und der in der Hydraulikpumpe entstehenden Radialkräfte vergrößert. Der vergrößerte Hebelarm hat eine größere Elastizität bzw. Nachgiebigkeit der Antriebswelle im Bereich der Hydraulikpumpe zur Folge, so dass die Anforderungen an die Nachgiebigkeit der Antriebswelle in der Hydraulikpumpe durch eine derartige Anordnung der zweiten Wellen-Lagereinrichtung noch besser adressiert werden können.

Weiter ist möglich, dass die zweite Wellen-Lagereinrichtung als hydrodynamisches Gleitlager ausgebildet ist. Das hydrodynamische Gleitlager weist verglichen zu einem Rillenkugellager ein größeres Lagerspiel in radialer Richtung auf. Hierdurch wird die Elastizität bzw. Nachgiebigkeit der Antriebswelle in der Hydraulikpumpe weiter vergrößert, so dass den Anforderungen an die Antriebswelle im Bereich der Hydraulikpumpe noch besser entsprochen werden kann. Zudem sind auch hydrodynamische Gleitlager bereits sehr ausgereifte Bauelemente, die besonders hohe Radialkräfte auf kleinem Bauraum aufnehmen können.

Zusätzlich kann vorgesehen sein, dass die Antriebswelle im Bereich des Antriebsmotors einen Motor-Wellenabschnitt aufweist und im Bereich der Hydraulikpumpe einen Pumpen-Wellenabschnitt aufweist, wobei der Motor-Wellenabschnitt einen größeren Durchmesser als der Pumpen-Wellenabschnitt aufweist. Neben der vorstehend beschriebenen Ausgestaltung der ersten und zweiten Wellen-Lagereinrichtungen bietet die Ausgestaltung der Wellenabschnitte eine weitere konstruktive Möglichkeit, um die teilweise gegensätzlichen Anforderungen von Antriebsmotor und Hydraulikpumpe an die Antriebswelle noch vorteilhafter zu vereinen. Durch den verringerten Durchmesser des Pumpen-Wellenabschnitts wird dessen polares Widerstandsmoment verringert, so dass sich die geforderten elastischen Eigenschaften insbesondere unter Biegebelastung weiter verbessern. Umgekehrt verhält es sich beim Motor-Wellenabschnitt, dessen vergrößerter Durchmesser ein entsprechend vergrößertes polares Widerstandsmoment nach sich zieht und dementsprechend einen steiferen Wellenabschnitt ausbildet, wodurch der Wirkungsgrad des Antriebsmotors weiter verbessert werden kann, wie vorstehend bereits erläutert wurde.

Ferner ist vorstellbar, dass der Antriebsmotor als Elektromotor ausgebildet ist. Die Integration des Elektromotors in die Baueinheit zusätzlich bestehend aus Hydraulikpumpe und Lenkgetriebe hat den Vorteil, dass der Elektromotor sehr gut steuerbar bzw. regelbar ist, d.h. dessen Regelung sehr dynamisch erfolgen kann und insbesondere Drehrichtungswechsel sehr einfach, präzise und schnell regelbar bzw. steuerbar sind. Zudem kann ein Elektromotor einfach in bestehende Steuer- bzw. Regelgerätearchitekturen eingebunden bzw. mit diesen gekoppelt werden. So ist es möglich, dass der Elektromotor ein eigenes Steuergerät aufweist. Zusätzlich oder alternativ ist es möglich, dass der Elektromotor von einem Steuergerät des Lenksystems angesteuert werden kann oder von einem Fahrzeugsteuergerät. Diese Steuergeräte können selbstverständlich auch Regelungsaufgaben des Elektromotors übernehmen. Zudem kann der Elektromotor derart gesteuert bzw. geregelt werden, um Fahrerassistenzsysteme wie Spurhalteassistent, Stauassistent, Windkompensationsassistent bzw. teil- oder vollautonome Lenkbefehle zu implementieren.

Ebenfalls ist es denkbar, dass die Hydraulikpumpe als bidirektionale Hydraulikpumpe ausgebildet ist. Diese Ausgestaltung hat den besonderen Vorteil, dass der Hydraulikstrom, welcher einen doppelwirkenden Kolben im Lenkgetriebe mit Druck beaufschlagt, von der Pumpe umkehrbar ist. Die Folge ist, dass ggf. auf aufwändige und teure Steuerventile verzichtet werden kann, so dass sich die Ansteuerung bzw. die Versorgung des Lenkgetriebe vereinfacht. Ebenso verringert sich der Regelungs- und/oder Steuerungsaufwand für das Lenksystem, da auf die Ansteuerung dieser zusätzlichen Ventile verzichtet werden kann.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische perspektivische Darstellung eines Lenksystems aus dem Stand der Technik ;
- Fig. 2a: eine erste schematische Block-Darstellung eines Ausführungsbeispiels eines erfindungsgemäßen Lenksystems; und
- Fig. 2b: eine zweite schematische Block-Darstellung des Ausführungsbeispiels des erfindungsgemäßen Lenksystems gemäß Fig. 2a.

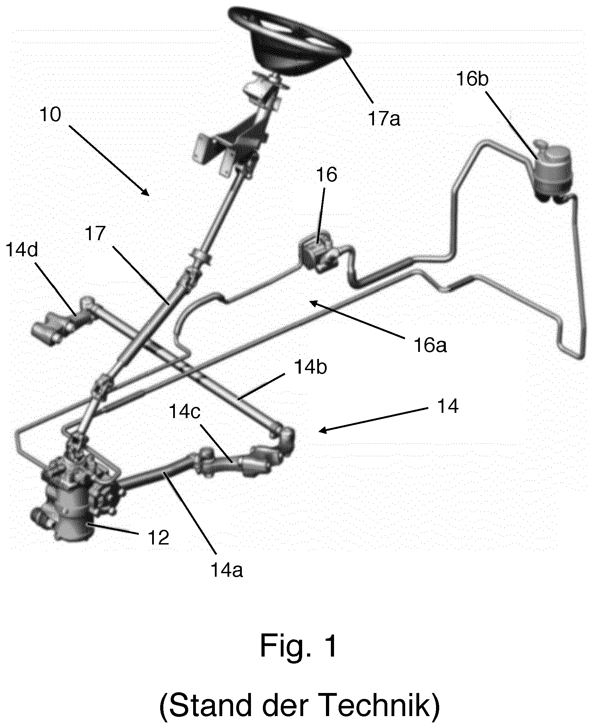

**Fig. 1** zeigt eine schematische perspektivische Darstellung eines Lenksystems 10 aus dem Stand der Technik.

Das Lenksystem 10 besteht im Wesentlichen aus einem Lenkgetriebe 12 in Form eines Kugelmutter-Hydrolenkgetriebes, einem mit diesem gekoppelten Lenkmechanismus 14 zur Lenkung der beiden Fahrzeugräder (nicht in Fig. 1 gezeigt).

Der Lenkmechanismus weist eine erste und zweite Lenkstange 14a, 14b sowie eine erste und zweite Spurstange 14c, 14d auf.

Gemäß Fig. 1 sind die erste Lenkstange 14a und die erste Spurstange 14c mit einem ersten Radträger gelenkig zu dessen Lenkung bzw. Verschwenkung verbunden, wobei die erste Lenkstange 14a mit einer Ausgangswelle des Lenkgetriebes 12 gekoppelt ist.

Die zweite Lenkstange 14c wiederum ist per Mitnehmer an dem ersten Radträger angelenkt und koppelt somit gelenkig den ersten Radträger mit dem zweiten Radträger über den Mitnehmer und die zweite Spurstange 14d.

Ferner weist das Lenksystem 10 eine Hydraulikpumpe 16 auf, die über eine Verrohrung 16a mit dem Lenkgetriebe 12 zu dessen Versorgung mit Hydrauliköl gekoppelt ist.

Zwischen dem hydraulischen Ausgang des Lenkgetriebes 12 und dem Eingang der Hydraulikpumpe 16 ist in der Verrohrung 16a ein Ausgleichsbehälter 16b angeordnet.

Zudem beinhaltet das Lenksystem gemäß Fig. 1 eine Lenksäule 17 in Form eines mehrgliedrigen Gestänges sowie ein drehfest daran gekoppeltes Lenkrad 17a zur manuellen Steuerung des Lenkgetriebes 12, was eine Verschwenkung des Lenkmechanismus 14 und sodann eine Lenkung der Fahrzeugräder zur Folge hat.

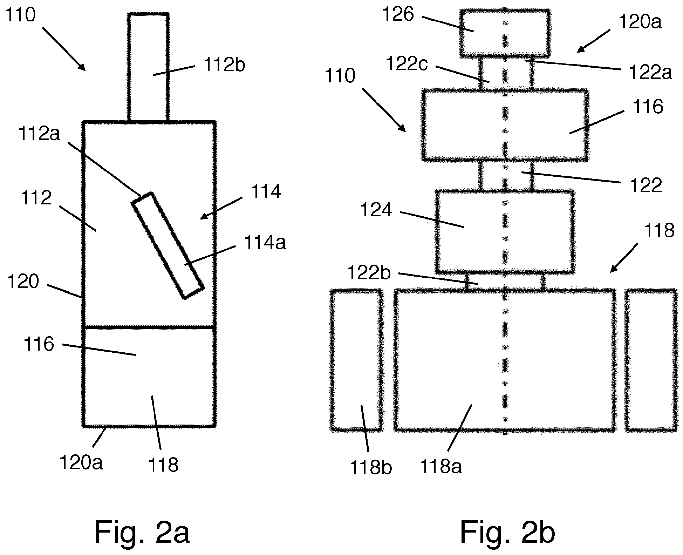

**Fig. 2a** zeigt eine erste schematische Block-Darstellung eines Ausführungsbeispiels eines erfindungsgemäßen Lenksystems 110.

Zu dem Lenksystem 10 gemäß Fig. 1 aus dem Stand der Technik gleiche oder ähnliche Bauteile des erfindungsgemäßen Lenksystems 110 weisen jeweils ein um die Zahl 100 erhöhtes Bezugszeichen auf.

Das Lenksystem 110 für ein Fahrzeug weist gemäß Fig. 2a ein Lenkgetriebe 112 auf.

Das Lenkgetriebe 112 ist als Kugelmutter-Hydrolenkgetriebe ausgebildet und das Fahrzeug ist entsprechend als Nutzfahrzeug ausgebildet.

Ferner weist das Lenksystem 110 einem Lenkmechanismus 114 zur Lenkung eines ersten Fahrzeugrades und zur Lenkung eines zweiten Fahrzeugrades auf.

Stellvertretend für den Lenkmechanismus 114 ist in Fig. 2a lediglich die erste Lenkstange 114a schematisch dargestellt, wie drehfest mit einer Ausgangswelle 112a des Lenkgetriebes 112 gekoppelt ist.

Über die erste Lenkstange 114a ist somit das Lenkgetriebe 112 mit dem Lenkmechanismus 114 gekoppelt.

Ferner weist das Lenksystem 110 eine Hydraulikpumpe 116 zur Versorgung des Lenkgetriebes 112 mit Hydraulikfluid auf.

Die Hydraulikpumpe 116 ist als bidirektionale Hydraulikpumpe 116 ausgebildet.

Bidirektional heißt in diesem Fall, dass die Hydraulikpumpe 116 durch Umschaltung ihrer Drehrichtung (erfolgt durch den Antriebsmotor 118) Druck- und Saugseite vertauschen kann und somit einen Hydraulikstrom je nach Lenkungsrichtung umkehren kann.

Dieser umgekehrte Hydraulikstrom beaufschlagt sodann den doppelwirkenden Lenkzylinder im Inneren des Lenkgetriebes je nach geforderter bzw. gesteuerter Lenkbewegung.

Zudem ist ein vom Traktionsantrieb des Fahrzeugs unabhängig und separat angeordneter Antriebsmotor 118 vorgesehen, der mit der Hydraulikpumpe 116 zu deren Antrieb gekoppelt ist.

Gemäß des Grundgedankens der Erfindung sind das Lenkgetriebe 112, die Hydraulikpumpe 116 und der Antriebsmotor 118 im montierten Zustand als gemeinsame Baueinheit 120 ausgebildet.

Weitere Nebenaggregate wie z.B. ein Ausgleichsbehälter der Hydraulikpumpe 116 oder Steuerungs- bzw. Regelungseinheiten des Antriebsmotors 118 können ebenfalls in die Baueinheit 120 integriert sein, sind jedoch in Fig. 2a nicht dargestellt.

Ferner kann vorgesehen sein, dass die Hydraulikpumpe 116 und der Antriebsmotor 118 als vormontierte gemeinsame Motor-Pumpen-Einheit 120a ausgebildet sind und zur Ausbildung der Baueinheit 120 stirnseitig an das Lenkgetriebe 112 angeflanscht sind.

Die Motor-Pumpen-Einheit 120a kann dabei insbesondere stirnseitig gegenüber eines mechanischen Durchtriebs 112b zur mechanischen Kopplung mit einer Lenksäule an dem Lenkgetriebe 112 angeflanscht sein.

Alternativ ist ebenfalls denkbar, dass die Motor-Pumpen-Einheit 120a stirnseitig im Bereich des mechanischen Durchtriebs 112b an das Lenkgetriebe 112 angeflanscht sein kann.

Alternativ kann die Motor-Pumpen-Einheit 120a ebenso an einer Außenseite des Lenkgetriebes 112 an dessen axialer Erstreckung angeflanscht sein.

Wie Fig. 2a weiter zu entnehmen ist, sind Hydraulikleitungen oder zusätzliche hydraulische Schaltventile nicht dargestellt, lediglich der mechanische Durchtrieb 112b zur mechanischen Kopplung mit einer Lenksäule ist dargestellt.

Fig. 2b zeigt eine zweite schematische Block-Darstellung des Ausführungsbeispiels des erfindungsgemäßen Lenksystems gemäß Fig. 2a.

Darin ist im Wesentlichen die Motor-Pumpen-Einheit im Wesentlichen bestehend aus Hydraulikpumpe 116 sowie dem Antriebsmotor 118 zu sehen.

Dabei ist der Antriebsmotor 118 direkt mit der Hydraulikpumpe 116 gekoppelt.

Direkt kann in diesem Zusammenhang heißen, dass Antriebsmotor 118 und Hydraulikpumpe 116 drehfest ohne Zwischenbauteile miteinander verbunden sind.

Auf eine Kupplung wird somit verzichtet.

Ferner ist in diesem Zusammenhang mit der direkten Kopplung zu erwähnen, dass der Antriebsmotor 118 und die Hydraulikpumpe 116 eine gemeinsame Antriebswelle 122 zur direkten Kopplung aufweisen.

Die Antriebswelle 122 erstreckt sich axial von dem Antriebsmotor 118 bis zur Hydraulikpumpe 116, wo sie im montierten Zustand in Richtung des Lenkgetriebes 112 axial aus der Hydraulikpumpe 116 herausragt.

Der Antriebsmotor 118 ist als Elektromotor ausgebildet und weist einen Rotor 118a, der mit der Antriebswelle 122 drehfest gekoppelt ist, sowie einen Stator 118b auf.

Das Lenksystem 110, und insbesondere die Motor-Pumpen-Einheit 120a, weist ferner eine erste Wellen-Lagereinrichtung 124 und eine zweite Wellen-Lagereinrichtung 126 auf.

Durch die erste und zweite Wellen-Lagereinrichtung 124, 126 ist die Antriebswelle im montierten Zustand zumindest teilweise darin gelagert.

Zusätzlich können der Antriebsmotor 118 und die Hydraulikpumpe 116 in ihren jeweiligen Gehäusen weitere Lagereinrichtungen (nicht in Fig. 2b dargestellt) aufweisen.

Gemäß Fig. 2b ist die erste Wellen-Lagereinrichtung 124 im montierten Zustand an der Antriebswelle 122 zwischen dem Antriebsmotor 118 und der Hydraulikpumpe 116 angeordnet.

Hierbei ist vorgesehen, dass die erste Wellen-Lagereinrichtung 124 axial näher an dem Antriebsmotor 118 als an der Hydraulikpumpe 116 angeordnet ist.

Denkbar in diesem Zusammenhang ist ebenfalls, dass die erste Wellen-Lagereinrichtung 124 durch einen Deckel direkt an das Gehäuse des Antriebsmotors 118 angeflanscht ist oder die erste Wellen-Lagereinrichtung 124 in dem Gehäuse des Antriebsmotors 118 direkt gelagert ist.

Zusätzlich oder alternativ kann vorgesehen sein, dass der Antriebsmotor 118 und die Hydraulikpumpe 116 durch einen Flansch (nicht in Fig. 2b gezeigt) miteinander gekoppelt sind und die erste Wellen-Lagereinrichtung 124 durch den Flansch aufgenommen bzw. gelagert ist.

Die erste Wellen-Lagereinrichtung 124 ist als Rillenkugellager ausgebildet.

Das Rillenkugellager wiederum kann besonders vorteilhaft als zweireihiges Rillenkugellager ausgestaltet sein.

Wie vorstehend beschreiben, weist die Antriebswelle 122 ein axiales Ende 122a auf, das im montierten Zustand an einer Seite der Hydraulikpumpe 116 herausragt, die dem Antriebsmotor 118 abgewandt ist.

An diesem axialen Ende 122a ist die zweite Wellen-Lagereinrichtung 126 angeordnet.

Die zweite Wellen-Lagereinrichtung 126 kann direkt an dem Gehäuse der Hydraulikpumpe 116 angeordnet bzw. angeflanscht sein oder einen definierten axialen Abstand zu diesem aufweisen.

Zudem ist denkbar, dass die zweite Wellen-Lagereinrichtung 126 durch einen Deckel an die Hydraulikpumpe 116 angeflanscht ist oder direkter Bestandteil des Gehäuses der Hydraulikpumpe 116 ist.

Die zweite Wellen-Lagereinrichtung 126 ist als hydrodynamisches Gleitlager ausgebildet.

Die erste und zweite Wellen-Lagereinrichtung 124, 126 bilden somit ein hybrides Lagersystem aus.

Dabei soll ein hybrides Lagersystem so verstanden werden, dass sich die erste und zweite Wellen-Lagereinrichtung 124, 126 von ihren jeweiligen Lagerkonzepten bzw. Lagerausgestaltungen unterscheiden.

Das hybride Lagersystem in Form eines zweireihigen Rillenkugellagers sowie eines hydrodynamischen Gleitlagers ist somit nur beispielhaft, so dass auch andere hybride Lagerausgestaltungen denkbar sind.

Es können auch andere Wälzlagerformen wie Zylinderrollenlager, Nadellager, Kegelrollenlager, Tonnenlager oder Toroidalrollenlager verwendet werden.

Gleiches gilt für das Gleitlager, auch hier wäre beispielsweise ein hydrostatisches Gleitlager denkbar.

Als Lagerwerkstoffe können für die Gleitlagerbuchse Bronzen (Kupfer-Zinn-Legierung), Weißmetalle (Blei-Zinn-Legierung), mit Blei legierte Lagermetalle, Aluminiumlegierungen, Kunststoffe (zum Beispiel PTFE), Keramiken (auch faserverstärkt möglich), Graphite oder Messinglegierungen eingesetzt werden.

Wie Fig. 2b weiter entnommen werden kann, weist die Antriebswelle 122 im Bereich des Antriebsmotors 118 einen Motor-Wellenabschnitt 122b auf und im Bereich der Hydraulikpumpe einen Pumpen-Wellenabschnitt 122c auf.

Der Motor-Wellenabschnitt 122b weist dabei einen größeren Durchmesser als der Pumpen-Wellenabschnitt 122c auf.

Gemäß Fig. 2b ist die erste Wellen-Lagereinrichtung 124 noch auf einem Wellenabschnitt gelagert, welcher dem Durchmesser des Pumpen-Wellenabschnitts 122c entspricht.

Alternativ kann die erste Wellen-Lagereinrichtung 124 auf einem Wellenabschnitt gelagert sein, welcher dem Durchmesser des Motor-Wellenabschnitts 122b entspricht oder einen einem Durchmesser, der zwischen diesen beiden Durchmessern liegt.

Gemäß Fig. 2b ist die Antriebswelle 122 schematisch als einfach gestufte Welle dargestellt, wobei die Antriebswelle 122 auch mehrfache Stufungen bzw. Wellenschultern aufweisen kann.

### BEZUGSZEICHENLISTE

- 10: Lenksystem
- 12: Lenkgetriebe
- 14: Lenkmechanismus
- 14a: erste Lenkstange
- 14b: zweite Lenkstange
- 14c: erste Spurstange
- 14d: zweite Spurstange
- 16: Hydraulikpumpe
- 16a: Verrohrung
- 16b: Ausgleichsbehälter
- 17: Lenksäule
- 17a: Lenkrad

- 110: Lenksystem
- 112: Lenkgetriebe
- 112a: Ausgangswelle des Lenkgetriebes
- 112b: Durchtrieb
- 114: Lenkmechanismus
- 114a: erste Lenkstange
- 116: Hydraulikpumpe
- 118: Antriebsmotor
- 118a: Rotor
- 118b: Stator
- 120: Baueinheit
- 120a: Motor-Pumpen-Einheit
- 122: Antriebswelle
- 122a: axiales Ende der Antriebswelle
- 122b: Motor-Wellenabschnitt
- 122c: Pumpen-Wellenabschnitt
- 124: erste Wellen-Lagereinrichtung
- 126: zweite Wellen-Lagereinrichtung

## Patentansprüche

1. Lenksystem (110) für ein Fahrzeug, insbesondere Nutzfahrzeug, mit wenigstens einem Lenkgetriebe (112), insbesondere Kugelmutter-Hydrolenkgetriebe; mit wenigstens einem Lenkmechanismus (114) zur Lenkung wenigstens eines ersten Fahrzeugrades und zur Lenkung wenigstens eines zweiten Fahrzeugrades, wobei das Lenkgetriebe (112) mit dem Lenkmechanismus (114) gekoppelt ist; mit wenigstens einer Hydraulikpumpe (116) zur Versorgung des Lenkgetriebes (112) mit Hydraulikfluid; und mit wenigstens einem vom Traktionsantrieb des Fahrzeugs unabhängig und/oder separat vorgesehenen Antriebsmotor (118), der mit der Hydraulikpumpe (116) zu deren Antrieb gekoppelt ist, wobei das Lenkgetriebe (112), die Hydraulikpumpe (116) und der Antriebsmotor (118) im montierten Zustand als Baueinheit (120) ausgebildet sind, wobei der Antriebsmotor (118) mit der Hydraulikpumpe (116) direkt, insbesondere ohne Kupplung, gekoppelt ist, und wobei der Antriebsmotor (118) und die Hydraulikpumpe (116) wenigstens eine gemeinsame Antriebswelle (122) aufweisen,
**dadurch gekennzeichnet, dass**
die Antriebswelle (122) im Bereich des Antriebsmotors (118) einen Motor-Wellenabschnitt (122b) aufweist und im Bereich der Hydraulikpumpe (116) einen Pumpen-Wellenabschnitt (122c) aufweist, wobei der Motor-Wellenabschnitt (122b) einen größeren Durchmesser als der Pumpen-Wellenabschnitt (122c) aufweist.

2. Lenksystem (110) nach Anspruch 1,
**dadurch gekennzeichnet, dass**
das Lenksystem (110) wenigstens eine erste Wellen-Lagereinrichtung (124) und wenigstens eine zweite Wellen-Lagereinrichtung (126) aufweist, durch welche die Antriebswelle (122) im montierten Zustand zumindest teilweise gelagert ist.

3. Lenksystem (110) nach Anspruch 2,
**dadurch gekennzeichnet, dass**
die erste Wellen-Lagereinrichtung (124) und die zweite Wellen-Lagereinrichtung (126) ein hybrides Lagersystem ausbilden.

4. Lenksystem (110) nach Anspruch 2 oder Anspruch 3,
**dadurch gekennzeichnet, dass**
die erste Wellen-Lagereinrichtung (124) im montierten Zustand an der Antriebswelle (122) zwischen dem Antriebsmotor (118) und der Hydraulikpumpe (116) angeordnet ist.

5. Lenksystem (110) nach einem der Ansprüche 2 bis 4,
**dadurch gekennzeichnet, dass**
die erste Wellen-Lagereinrichtung (124) als, insbesondere zweireihiges, Rillenkugellager ausgebildet ist.

6. Lenksystem (110) nach einem der Ansprüche 2 bis 5,
**dadurch gekennzeichnet, dass**
die Antriebswelle (122) ein axiales Ende (122a) aufweist, das im montierten Zustand an einer Seite der Hydraulikpumpe (116) herausragt, die dem Antriebsmotor (118) abgewandt ist, wobei die zweite Wellen-Lagereinrichtung (126) an diesem axialen Ende (122a) der Antriebswelle (122) angeordnet ist.

7. Lenksystem (110) nach einem der Ansprüche 2 bis 6,
**dadurch gekennzeichnet, dass**
die zweite Wellen-Lagereinrichtung (126) als hydrodynamisches Gleitlager ausgebildet ist.

8. Lenksystem (110) nach einem der vorhergehenden Ansprüche,
**dadurch gekennzeichnet, dass**
der Antriebsmotor (118) als Elektromotor ausgebildet ist.

9. Lenksystem (110) nach einem der vorhergehenden Ansprüche,
**dadurch gekennzeichnet, dass**
die Hydraulikpumpe (116) als bidirektionale Hydraulikpumpe (116) ausgebildet ist.

## Claims

1. A steering system (110) for a vehicle, in particular a utility vehicle, with at least one steering gear (112), in particular a ball-and-nut hydraulic steering gear; with at least one steering mechanism (114) for steering at least one first vehicle wheel and for steering at least one second vehicle wheel, wherein the steering gear (112) is coupled to the steering mechanism (114); with at least one hydraulic pump (116) for supplying the steering gear (112) with hydraulic fluid; and with at least one drive motor (118) which is provided independently of and/or separately from the traction drive of the vehicle and which is coupled to the hydraulic pump (116) in order to drive same, wherein in mounted state, the steering gear (112), the hydraulic pump (116), and the drive motor (118) are configured as a structural unit (120), wherein the drive motor (118) is coupled to the hydraulic pump (116) directly, in particular without a clutch, and wherein the drive motor (118) and the hydraulic pump (116) have at least one common drive shaft (122),
**characterized in that**
the drive shaft (122) has a motor shaft portion (122b) in the region of the drive motor (118) and a pump shaft portion (122c) in the region of the hydraulic pump (116), wherein the motor shaft portion (122b) has a greater diameter than the pump shaft portion (122c).

2. The steering system (110) as claimed in claim 1,
**characterized in that**
the steering system (110) has at least one first shaft bearing device (124) and at least one second shaft bearing device (126), via which the drive shaft (122) is at least partly supported in mounted state.

3. The steering system (110) as claimed in claim 2,
**characterized in that**
the first shaft bearing device (124) and the second shaft bearing device (126) form a hybrid bearing system.

4. The steering system (110) as claimed in claim 2 or claim 3,
**characterized in that**
in mounted state, the first shaft bearing device (124) is arranged on the drive shaft (122) between the drive motor (118) and the hydraulic pump (116).

5. The steering system (110) as claimed in any of claims 2 to 4,
**characterized in that**
the first shaft bearing device (124) is configured as an in particular double-row grooved ball bearing.

6. The steering system (110) as claimed in any of claims 2 to 5,
**characterized in that**
the drive shaft (122) has an axial end (122a) which, in mounted state, protrudes from a side of the hydraulic pump (116) facing away from the drive motor (118), wherein the second shaft bearing device (126) is arranged at this axial end (122a) of the drive shaft (122).

7. The steering system (110) as claimed in any of claims 2 to 6,
**characterized in that**
the second shaft bearing device (126) is configured as a hydrodynamic plain bearing.

8. The steering system (110) as claimed in any of the preceding claims,
**characterized in that**
the drive motor (118) is configured as an electric motor.

9. The steering system (110) as claimed in any of the preceding claims,
**characterized in that**
the hydraulic pump (116) is configured as a bidirectional hydraulic pump (116).

## Revendications

1. Système de direction (110) pour un véhicule, en particulier un véhicule utilitaire, avec au moins un boîtier de direction (112), en particulier un boîtier de direction hydraulique à écrou à billes ; avec au moins un mécanisme de direction (114) pour diriger au moins une première roue de véhicule et diriger au moins une seconde roue de véhicule, dans lequel le boîtier de direction (112) est couplé au mécanisme de direction (114) ; avec au moins une pompe hydraulique (116) pour alimenter le boîtier de direction (112) en fluide hydraulique ; et avec au moins un moteur d'entraînement (118) prévu indépendamment et/ou séparément de l'entraînement en traction du véhicule, moteur qui est couplé à la pompe hydraulique (116) pour l'entraîner, dans lequel le boîtier de direction (112), la pompe hydraulique (116) et le moteur d'entraînement (118) sont conçus, à l'état monté, en tant que module (120), dans lequel le moteur d'entraînement (118) est couplé directement à la pompe hydraulique (116), en particulier sans accouplement, et dans lequel le moteur d'entraînement (118) et la pompe hydraulique (116) présentent au moins un arbre d'entraînement commun (122),
**caractérisé en ce que**
l'arbre d'entraînement (122) présente, au niveau du moteur d'entraînement (118), une section d'arbre de moteur (122b) et, au niveau de la pompe hydraulique (116), une section d'arbre de pompe (122c), dans lequel la section d'arbre de moteur (122b) présente un diamètre supérieur à celui de la section d'arbre de pompe (122c).

2. Système de direction (110) selon la revendication 1,
**caractérisé en ce que**
le système de direction (110) présente au moins un premier appareil de palier d'arbre (124) et au moins un second appareil de palier d'arbre (126), via lesquels l'arbre d'entraînement (122) est au moins partiellement supporté à l'état monté.

3. Système de direction (110) selon la revendication 2,
**caractérisé en ce que**
le premier appareil de palier d'arbre (124) et le second appareil de palier d'arbre (126) forment un système de palier hybride.

4. Système de direction (110) selon la revendication 2 ou la revendication 3,
**caractérisé en ce que**
le premier appareil de palier d'arbre (124) est disposé, à l'état monté, au niveau de l'arbre d'entraînement (122) entre le moteur d'entraînement (118) et la pompe hydraulique (116).

5. Système de direction (110) selon l'une quelconque des revendications 2 à 4,
**caractérisé en ce que**
le premier appareil de palier d'arbre (124) est conçu en tant que roulement rigide à billes, en particulier à deux rangées.

6. Système de direction (110) selon l'une quelconque des revendications 2 à 5,
**caractérisé en ce que**
l'arbre d'entraînement (122) présente une extrémité axiale (122a) qui, à l'état monté, fait saillie d'un côté de la pompe hydraulique (116) qui est opposé au moteur d'entraînement (118), dans lequel le second appareil de palier d'arbre (126) est disposé au niveau de cette extrémité axiale (122a) de l'arbre d'entraînement (122).

7. Système de direction (110) selon l'une quelconque des revendications 2 à 6,
**caractérisé en ce que**
le second appareil de palier d'arbre (126) est conçu en tant que palier lisse hydrodynamique.

8. Système de direction (110) selon l'une quelconque des revendications précédentes,
**caractérisé en ce que**
le moteur d'entraînement (118) est conçu en tant que moteur électrique.

9. Système de direction (110) selon l'une quelconque des revendications précédentes,
**caractérisé en ce que**
la pompe hydraulique (116) est conçue en tant que pompe hydraulique bidirectionnelle (116).
